Europäisches Patentamt

European Patent Office

Office européen des brevets

(19)

(11) Veröffentlichungsnummer: **0 435 112 A2**

## EUROPÄISCHE PATENTANMELDUNG

(12)

(21) Anmeldenummer: **90124247.9**

(22) Anmeldetag: **14.12.90**

(51) Int. Cl.5: **G05D 16/20**

(30) Priorität: **27.12.89 DE 3943003**

(43) Veröffentlichungstag der Anmeldung:
**03.07.91 Patentblatt 91/27**

(84) Benannte Vertragsstaaten:
**DE ES FR GB IT**

(71) Anmelder: **LUCAS INDUSTRIES PUBLIC
LIMITED COMPANY
Brueton House, New Road
Solihull, West Midlands B91 3TX(GB)**

(72) Erfinder: **Pickenhahn, Josef
Friedrich-Ebert-Strasse 42
W-5472 Plaidt(DE)**

(74) Vertreter: **von Hellfeld, Axel, Dipl.-Phys. Dr. et
al
Wuesthoff & Wuesthoff Patent- und
Rechtsanwälte Schweigerstrasse 2
W-8000 München 90(DE)**

(54) **Ventil.**

(57) Ein Ventil zum Steuern eines Differenzdruckes weist einen in einem Gehäuse 30 mittels eines Elektromagneten 32 verschiebbaren Ventilkolben 36 auf. Eine erste Feder 44 drückt über einen Anschlag 52 den Ventilsitz V$_S$ in seine Ruhestellung gegen einen ersten Sitzring 60. Der Ventilkolben 36 wird bei einer Bewegung in Richtung auf den Ventilsitz V$_S$ vor oder bei seinem Auftreffen auf den Ventilsitz über eine zweite Feder 42 abgefangen. Weil die erste Feder eine etwas größere Spannkraft aufweist als die zweite Feder ist hiermit eine sehr feinfühlige Betätigung des Ventils möglich.

FIG. 2

EP 0 435 112 A2

# VENTIL

Die Erfindung betrifft ein Ventil zum Steuern eines Differenzdruckes mit einem Gehäuse, das einen Einlaß für ein unter relativ hohem Druck stehendes Fluid und zumindest einen Auslaß für das Fluid aufweist und in dem ein Ventilkolben mittels eines Elektromagneten axial in Richtung auf einen Ventilsitz verschiebbar ist, der mittels einer ersten Feder in entgegengesetzter Richtung axial vorgespannt ist.

Insbesondere soll ein solches Ventil zum Steuern eines Bremskraftverstärkers in einer Fahrzeugbremsanlage verwendet werden.

Aus der DE-OS 37 22 315 ist ein 3/2-Druckregelventil der eingangs genannten Art bekannt, bei dem zwei koaxiale, im Ventilgehäuse verschiebbar gelagerte Ventilglieder vorgesehen sind. Es erfolgt eine Regelung eines Sekundärdruckes in Abhängigkeit von einer Kraft, die auf eines der ventilglieder wirkt und von einem Elektromagneten erzeugt ist. Auf die Ventilglieder wirken Federn und die pneumatisch oder hydraulisch wirksamen Flächen sind so bemessen, daß die Ventilglieder sich in Abhängigkeit von den gewünschten Drücken einstellen.

Der Erfindung liegt die Aufgabe zugrunde, ein Ventil zum Steuern eines Differenzdruckes zu schaffen, welches einfach und funktionssicher aufgebaut ist, eine sehr exakte Dosierung eines Fluids gestattet und eine lange Lebensdauer besitzt. Das Ventil soll überdies geeignet sein, mit sehr geringen Kräften präzise betätigt zu werden.

Das erfindungsgemäße Ventil der eingangs genannten Art ist dadurch gekennzeichnet, daß der ventilkolben bei einer Bewegung in Richtung auf den Ventilsitz vor oder bei seinem Auftreffen auf den Ventilsitz über eine zweite Feder in Wirkeingriff kommt mit einem Anschlag, der mit dem Ventilsitz verbunden ist, und daß die erste Feder eine größere Spannkraft hat als die zweite Feder.

Erfindungsgemäß wird also ein axial bewegbarer Ventilsitz auf der einen Seite von einer ersten Feder beaufschlagt, die den Ventilsitz in seine Ruhelage vorspannt. Auf der anderen Seite ist ein Ventilkolben axial verschiebbar, der bei Betätigung des Ventils mittels eines Elektromagneten (oder einer anderen Stellvorrichtung) in Richtung auf den Ventilsitz bewegt wird. Trifft der Ventilkolben auf den Ventilsitz, so kann er ihn gegen die Kraft der ersten Feder in eine Offenstellung des Ventils abheben. Vor dem Auftreffen des Ventilkolbens auf den Ventilsitz ist aber erfindungsgemäß vorgesehen, daß die Bewegung des Ventilkolbens mittels einer zweiten Feder zunächst abgefangen wird, wobei die zweite Feder schwächer ist als die erste Feder, so daß erst eine erhöhte Kraft des Elektromagneten auf den Ventilkolben einwirken muß, damit dieser den Ventilsitz von einem Dichtring abheben kann.

Gemäß einer bevorzugten Ausgestaltung des erfindungsgemäßen Ventils ist der Ventilkolben hülsenförmig ausgebildet und umfängt konzentrisch eine innere Hülse, wobei die vorstehend genannte zweite Feder zwischen dem Ventilkolben und der inneren Hülse eingefangen ist. Diese Anordnung ermöglicht einen einfach zu montierenden Aufbau des Ventils.

Gemäß einer weiteren Ausgestaltung ist vorgesehen, daß der Ventilsitz auf einer Manschette aus elastischem Material ausgebildet ist und daß als Anschlag ein Ring vorgesehen ist.

Nach einer weiteren bevorzugten Ausgestaltung des erfindungsgemäßen Ventils ist vorgesehen, daß der Ventilsitz gegen einen ersten Sitzring andrückbar ist, wobei ein Strömungsweg vom Einlaß zu einem Auslaß geschlossen wird, und daß am Ventilkolben ein zweiter Sitzring ausgeformt ist, mit dem bei axialer Bewegung des Ventilkolbens der Ventilsitz vom ersten Sitzring abhebbar ist, wobei ein anderer Auslaß abgesperrt wird.

Der Begriff "Sitzring" im Sinne der Erfindung soll nicht notwendig beinhalten, daß der Ring eine messerscharfe Kante aufweist. Die Kante kann auch abgerundet sein. Wesentlich ist, daß der "Sitzring" auf den elastischen Ventilsitz eindrückbar ist und dabei eine Abdichtung erreicht wird.

Gemäß einer weiteren bevorzugten Weiterbildung des erfindungsgemäßen Ventils ist der Ventilsitz als ebene Fläche ausgeformt und die Sitzringe sind konzentrisch angeordnet. Dabei liegen die Sitzringe so eng als möglich nebeneinander, weisen also einen nur geringen Unterschied im Durchmesser auf.

Nachfolgend wird ein Ausführungsbeispiel der Erfindung anhand der Zeichnung näher erläutert. Es zeigt:

Fig. 1    schematisch einen Bremskraftverstärker einer Fahrzeugbremsanlage, bei der das erfindungsgemäße Ventil eingesetzt wird,

Fig. 2    Einzelheiten des erfindungsgemäßen Ventils in Ruhestellung, und

Fig. 3    den Verlauf der Abhängigkeit der am Ventil aufzubringenden Magnetkraft vom Weg des Ventilkolbens.

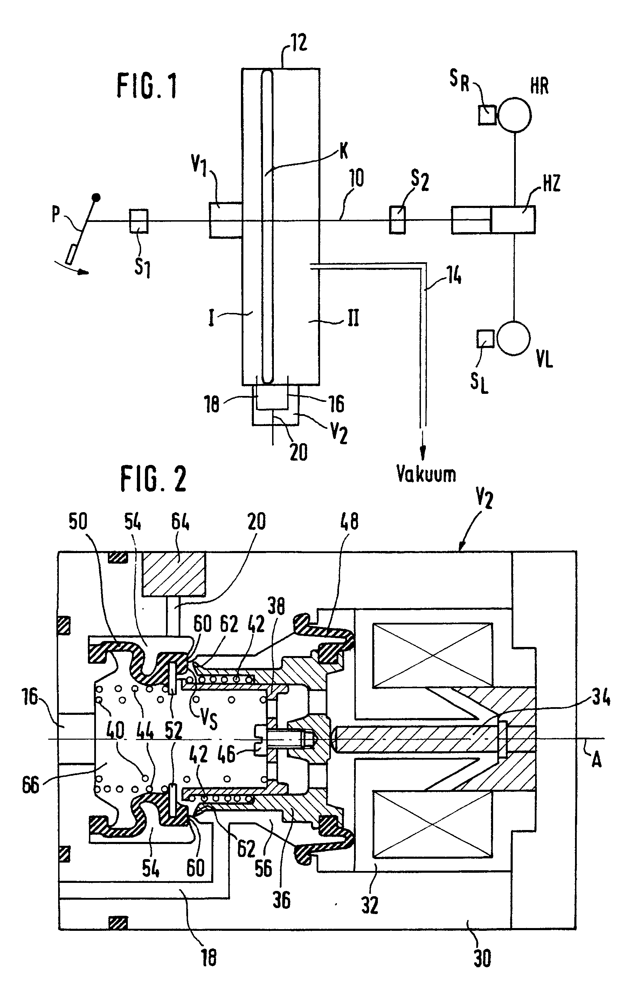

Fig. 1 zeigt in schematischer Darstellung ein Bremspedal P, das zum Bremsen in Richtung des Pfeiles bewegt wird. Die vom Bremspedal erzeugte Kraft wird mittels eines Kraftsensors $S_1$ gemessen. Im Kraftweg 10 hinter dem Kraftsensor $S_1$ ist ein Bremskraftverstärker 12 angeordnet, der in herkömmlicher Weise zwei Kammern I, II und einen aufgrund einer Druckdifferenz in den Kammern verschiebbaren Kolben K aufweist. Hinter dem Bremskraftverstärker 12 im Kraftweg 10 ist ein weiterer Kraftsensor $S_2$ angeordnet, mit dem die mittels des Bremskraftverstärkers 12 verstärkte Kraft meßbar ist. Der Kraftweg 10 führt in einen herkömmlichen Hauptbremszylinder HZ, der in bekannter Weise Hydraulikflüssigkeit unter Druck in Bremskreise einspeist. In Fig. 1 ist ein Bremskreis bestehend aus einem Rad HR hinten rechts und einem Rad VL vorne links gezeigt. An den Rädern sind als solche bekannte Drehzahlsensoren $S_R$ und $S_L$ angeordnet.

Die Kammer II des Bremskraftverstärkers 12 ist über eine Leitung 14 in bekannter Weise an eine Saugeinrichtung angeschlossen, um in der Kammer II Vakuum zu erzeugen.

Gemäß Fig. 1 sind zwei Ventile $V_1$ und $V_2$ zum Steuern des Bremskraftverstärkers 12 vorgesehen.

Das Ventil $V_1$ ist im Kraftweg 10 angeordnet. Es wird mechanisch betätigt, wenn das Bremspedal P gedrückt wird. Insoweit kann das Ventil $V_1$ von herkömmlicher Bauart sein.

Zusätzlich ist ein elektromagnetisch betätigbares Ventil $V_2$ vorgesehen mit zwei Ventilwegen. Dieses elektromagnetisch betätigbare Ventil $V_2$ ist Gegenstand dieser Erfindung. Ein Ventilweg 16, 18 verbindet die beiden Kammern I und II des Bremskraftverstärkers 12 und ein anderer Ventilweg 18, 20 verbindet die Überdruckkammer I mit einer Fluidquelle, wie z.B. der äußeren Atmosphäre. Die beiden Ventilwege 16, 18 einerseits und 18, 20 andererseits werden alternativ geschaltet, d.h. entweder es werden die beiden Kammern I, II miteinander verbunden,um in beiden Kammern Vakuum anzulegen, oder die Verbindung zwischen den Kammern I, II wird unterbrochen und nur die Kammer I über den Ventilweg 18, 20 mit der äußeren Atmosphäre verbunden.

Fig. 2 zeigt Einzelheiten des Steuerventils $V_2$. Die Funktion der Anschlüsse 16, 18 und 20 des Ventils wurde vorstehend bereits erläutert. Der Anschluß 20 dient als Einlaß für unter relativ hohem Druck stehendes Fluid, beispielsweise atmosphärische Luft.

Das Ventil $V_2$ weist ein Gehäuse 30 auf, in dem ein Elektromagnet 32 angeordnet ist. Der Anker 34 des Elektromagneten 32 ist in herkömmlicher Weise axial bewegbar entlang der Achse A des Ventils.

Der Anker 34 des Elektromagneten 32 wirkt in Fig. 2 links auf einen Ventilkolben 36, der ebenfalls axial beweglich ist. Im Ventilkolben 36 ist konzentrisch mit diesem eine innere Hülse 38 angeordnet, die ebenfalls in Grenzen axial verschieblich ist. Eine Feder 40 drückt die innere Hülse 38 sowie den Ventilkolben 36 in Fig. 2 nach rechts in die gezeigte Ruhestellung. In dieser Ruhestellung sind die Anschlüsse 16 und 18 des Ventils leitend miteinander verbunden, so daß bei Anwendung des Ventils bei einem Bremskraftverstärker gemäß Fig. 1 beide Kammern I, II des Bremskraftverstärkers besaugt werden. Die Schaltung der einzelnen Ventilwege wird weiter unten näher erläutert.

Außer der relativ schwachen Feder 40, welche den Ventilkolben in die Ruhelage bringt (ggf. unterstützt durch eine elastische Manschette 48), sind noch zwei weitere Federn vorgesehen, nämlich eine zwischen dem Ventilkolben 36 und der inneren Hülse 38 eingefangene Feder 42 sowie eine hierzu koaxiale Feder 44, die eine etwas stärkere Spannkraft aufweist als die Feder 42. Im in Fig. 2 gezeigten Zustand ist die Feder 42 entspannt.

Ein Bolzen 46 führt die innere Hülse 38 im Ventilkolben 36 und erlaubt eine axiale Relativbewegung zwischen diesen Teilen.

Die bereits erwähnte Manschette 48 ist aus elastischem Material und erlaubt eine axiale Bewegung des Ventilkolbens 36. Die Manschette 48 ist so ausgelegt, daß sie den Ventilkolben 36 in die in Fig. 2 gezeigte Ruhestellung bewegt.

Eine weitere Manschette 50 aus elastischem Material weist stirnseitig einen Ventilsitz $V_S$ auf. In die Manschette 50 fest eingefügt ist ein Stahlring 52, der als Anschlag für die Feder 44 und die innere Hülse 38 dient.

Zwischen dem Gehäuse 30 und der Manschette 54 ist ein Freiraum 54 gelassen und entsprechend besteht ein Freiraum 56 zwischen dem Ventilkolben 36 und dem Gehäuse 30.

Am Gehäuse 30 ist integral ein Sitzring 60 ausgebildet, der im Zustand gemäß Fig. 2 in Eingriff mit dem Ventilsitz $V_S$ steht. Durch diesen Eingriff des Sitzringes 60 mit dem Ventilsitz $V_S$ wird der Einlaß 20 des Ventils $V_2$ abgesperrt, so daß keine atmosphärische Luft in das Ventil eintreten kann.

Weiterhin ist auf der dem Ventilsitz $V_S$ zugekehrten Stirnseite des Ventilkolbens 36 ein weiterer Sitzring 62 ausgebildet, der im in Fig. 2 gezeigten Zustand noch nicht mit dem Ventilsitz in Eingriff steht.

Vor dem Einlaß 20 des Ventils $V_2$ ist ein Filter 64 angeordnet.

Die Funktion des Ventils $V_2$ ist wie folgt. Im Ruhezustand gemäß Fig. 2 sind der Einlaß 20 und der zugehörige umlaufende Freiraum 54 abgesperrt, weil der Ventilsitz $V_S$ durch die Feder 44 über den Anschlag 52 nach rechts gegen den Sitzring gedrückt ist.

In diesem Zustand verläuft ein Strömungsweg vom Anschluß 16 des Ventils über einen Freiraum 66 durch eine Lücke zwischen dem Anschlag 52 und der inneren Hülse 38 sowie eine weitere Lücke zwischen den Sitzringen 60, 62 in den Kanal 18. In der Fig. 2 sind die Sitzringe 60, 62 zwar sehr eng nebeneinander gezeichnet, jedoch ist zwischen ihnen ein Luftdurchgang möglich.

Wird nun der Elektromagnet 32 betätigt, so drückt der Anker 34 in Fig. 2 nach links auf den ventilkolben 36. Der Ventilkolben 36 bewegt sich deshalb ebenfalls nach links. Dabei wird auch die innere Hülse 38 über die Feder 42 nach links bewegt, bis sie mit ihrer linken Stirnkante gegen den Anschlag 52 stößt. Dabei wird zunächst die Bewegung der inneren Hülse 38 unterbrochen, weil die Federkonstante der Feder 42 z.B. 20 % kleiner ist als die Federkonstante der Feder 44. Bevorzugt sind die Federn 42, 44 so bemessen, daß die eingefangene Feder 42 5 bis 25 %, bevorzugt 10 bis 25 % geringere Federkraft aufweist als die von links auf den Anschlag 52 wirkende Feder 44.

Der Elektromagnet 32 schiebt nun den Ventilkolben 36 in Fig. 2 weiter nach links bis die Schneidkante 62 des Ventilkolbens 36 gegen den Ventilsitz $V_S$ stößt. Dabei drückt die Schneidkante 62 den Ventilsitz gegen die Kraft der Feder 44 nach links, so daß der Ventilsitz $V_S$ von der Schneidkante 60 des Gehäuses 30 abhebt.

Steht die Schneidkante 62 des Ventilkolbens 36 mit dem Ventilsitz $V_S$ in abdichtendem Eingriff, so ist der Anschluß 16 des Ventils $V_2$ abgesperrt. Hebt andererseits, wie vorstehend beschrieben, dabei der Ventilsitz $V_S$ vom Sitzring 60 ab, so ist ein Strömungsweg geschaffen vom Einlaß 20 über den Freiraum 54 in den weiteren Freiraum 56 und von dort in den Kanal 18. Somit kann das unter Druck stehende Fluid vom Einlaß 20 in den Kanal 18 strömen.

Die vorstehend beschriebene Anordnung der Federn ermöglicht ein sehr exaktes Steuern des Ventils mit relativ geringen Kräften.

Durch die eingefangene Feder 42 wird nämlich die Schließwirkung der Feder 44 unmittelbar vor dem Betätigen des Ventils "abgeschwächt". Stößt nämlich die innere Hülse 38 gegen den Anschlag 52, so drückt bereits die eingefangene Feder 42 mit einer Kraft gegen den Anschlag 52 und damit den Ventilsitz $V_S$, die nur um einige Prozent geringer ist als die Spannkraft der Schließfeder 44. Es genügt deshalb im besonders kritischen Bereich der Bewegung des Ventils, in dem eine Öffnung bzw. Schließung desselben erfolgt, eine relativ geringe Kraft zur Ventilbetätigung.

Somit kann die Steuerung der Fluidströmung mittels des Ventils sehr feinfühlig und exakt erfolgen. Das Ventil ermöglicht eine exakte Dosierung und spricht quasi verzögerungsfrei an.

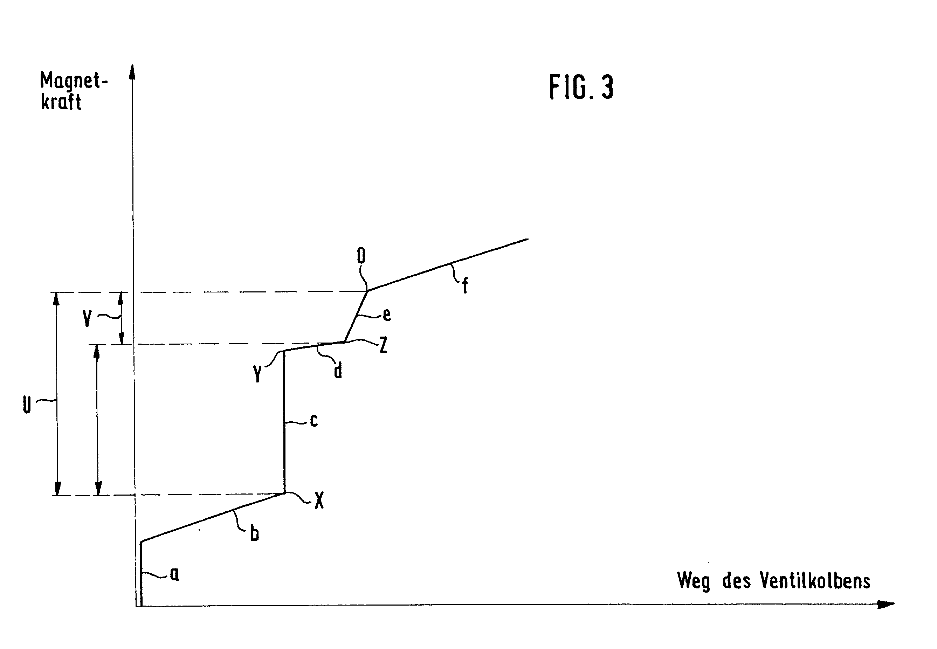

Fig. 3 zeigt die funktionale Abhängigkeit der Magnetkraft des Elektromagneten 32 und des Weges des Ventilkolbens 36 bei dem vorstehend beschriebenen Öffnungshub. Zunächst genügt eine relativ geringe Magnetkraft, um auf dem Weg a einen Leerhub zu überwinden. Danach muß die Spannkraft der relativ schwachen Rückführfeder 40 überwunden werden. Die Steigung der Kurve b entspricht der Federkonstanten der Feder 40.

Am Punkt X stößt die innere Hülse 38 gegen den Anschlag 52. Es herrscht praktisch Stillstand des Ankers 34 des Elektromagneten 32 bis der Elektromagnet eine hinreichend große Kraft entwickelt hat um die eingefangene Feder 42 komprimieren zu können. Dies ist am Punkt Y der Fall. Danach wirkt die Feder 42 einer weiteren Bewegung des Ankers entgegen und somit entspricht die Steigung des Kurvenstückes d der Federkonstanten der eingefangenen Feder 42. Am Punkt Z trifft der Sitzring 62 des Ventilkolbens 36 auf den Ventilsitz $V_S$.

Danach wirkt am Kurvenstück e die relativ starke Feder 44, weshalb dieses Kurvenstück eine stärkere Steigung aufweist als das Kurvenstück d, welches der etwas schwächeren Feder 42 entspricht.

Am Punkt O hebt der Ventilsitz $V_S$ vom Sitzring ab und das Ventil öffnet.

Die in Fig. 3 eingezeichnete Kraftdifferenz U ist diejenige Kraft-Hysterese, die bei einem Ventil mit einer einzigen Feder auftreten würde, die zum Öffnen des Ventils überwunden werden muß, also einem nicht erfindungsgemäßen Ventil, während erfindungsgemäß beim Öffnen und Schließen des Ventils nur die relativ geringe Kraftdifferenz V überwunden werden muß. Die Steigung des zugehörigen Kurvenstückes e entspricht nur der "Restkraft" der Feder 44, da deren Spannkraft bereits durch die gedrückte Feder 42 großteils aufgehoben worden ist.

## Ansprüche

1. Ventil zum Steuern eines Differenzdruckes mit einem Gehäuse (30), das einen Einlaß (20) für ein unter relativ hohem Druck stehendes Fluid und zumindest einen Auslaß (18) für das Fluid aufweist und in dem ein ventilkolben (36) mittels eines Elektromagneten (32) axial in Richtung auf einen Ventilsitz ($V_S$) verschiebbar ist, der mittels einer ersten Feder (44) in entgegengesetzter Richtung axial vorgespannt ist, dadurch **gekennzeichnet,** daß der Ventilkolben (36) bei einer Bewegung in Richtung auf den Ventilsitz ($V_S$) vor oder bei seinem Auftreffen auf den Ventilsitz ($V_S$) über eine zweite Feder (42) in Wirkeingriff kommt mit einem Anschlag (52), der mit dem Ventilsitz ($V_S$) verbunden ist, und daß die erste Feder (44) eine größere Spannkraft hat als die zweite Feder (42).

2. Ventil nach Anspruch 1,

dadurch **gekennzeichnet,**
daß der Ventilkolben (36) hülsenförmig ist und konzentrisch eine innere Hülse (38) umfängt und daß die zweite Feder (42) zwischen dem Ventilkolben und der inneren Hülse (38) eingefangen ist.

3. Ventil nach einem der Ansprüche 1 oder 2,
   dadurch **gekennzeichnet,**
   daß der Ventilsitz (V$_S$) auf einer Manschette (50) aus elastischem Material ausgebildet ist und daß als Anschlag (52) ein Ring vorgesehen ist.

4. Ventil nach einem der vorhergehenden Ansprüche,
   dadurch **gekennzeichnet,**
   daß der Ventilsitz (V$_S$) gegen einen ersten Sitzring (60) andrückbar ist, wobei ein Strömungsweg vom Einlaß (20) zu einem Auslaß (18) geschlossen wird, und daß am Ventilkolben (36) ein zweiter Sitzring (62) ausgeformt ist, mit dem bei axialer Bewegung des Ventilkolbens (36) der Ventilsitz (V$_S$) vom ersten Sitzring (60) abhebbar ist, wobei ein anderer Auslaß (16) abgesperrt wird.

5. Ventil nach Anspruch 4,
   dadurch **gekennzeichnet,**
   daß der Ventilsitz (V$_S$) als ebene, radiale Fläche geformt ist und daß die Sitzringe (60, 62) konzentrisch sind sowie einen geringen Unterschied im Durchmesser aufweisen.

6. Ventil nach einem der vorhergehenden Ansprüche,
   dadurch **gekennzeichnet,**
   daß der Ventilkolben (36) mittels einer elastischen Manschette (48) im Gehäuse (30) geführt ist.

FIG.1

FIG.2

FIG. 3